# EUROPÄISCHE PATENTANMELDUNG

(11) **EP 4 105 611 A1**
(43) Veröffentlichungstag der Anmeldung: **21.12.2022**
(21) Anmeldenummer: 21179209.8
(22) Anmeldetag: 14.06.2021
(51) Int. Cl.: G01D 7/00, G01D 13/00

(54) **EINRICHTUNG ZUR AUSGABE INSBESONDERE EINES LAUFLICHTS ENTSPRECHEND EINES/EINER UM IHRE SYMMETRIEACHSE ERFASSTEN DREHWINKELS UND/ODER DREHRICHTUNG SOWIE GEEIGNETER STELLANTRIEB**

(71) Anmelder: Siemens Schweiz AG, 8047 Zürich (CH)
(72) Erfinder: Wattenhofer, Severin, 6344 Meierskappel (CH)
(74) Vertreter: Maier, Daniel Oliver

(57) **Zusammenfassung**

Eine Einrichtung (E) ist zur Ausgabe eines mittels der Einrichtung um ihre Hauptachse (HA) erfassten Drehwinkels und einer erfassten Drehrichtung (L, R) sowie zur Befestigung an einem Wellenende (WE) oder Stellanschluss (SA) eines Stellantriebs (S) eingerichtet. Erfindungsgemäss umfasst die Einrichtung eine Ausgabeeinheit (AE) und eine darin aufgenommene inertiale Messeinheit (IMU, GYRO), eingerichtet zur Erfassung einer Rotation um eine Rotationsmessachse (DA) der inertialen Messeinheit sowie zur Ausgabe eines der Rotation entsprechenden Sensorsignals. Die Einrichtung umfasst eine Steuereinheit (MC), welche mit der Ausgabeeinheit und der inertialen Messeinheit verbunden ist, dazu eingerichtet, die Ausgabeeinheit zur Ausgabe eines aus dem Sensorsignal abgeleiteten Drehwinkelwerts (α) und/oder einer aus dem Sensorsignal abgeleiteten Drehrichtungsinformation (RL, RR) anzusteuern. Die Erfindung betrifft einen Stellantrieb eingerichtet zum erweiterten Stellbetrieb mithilfe einer derartigen Einrichtung.

## Beschreibung

Die Erfindung betrifft eine Einrichtung zur Ausgabe eines mittels der Einrichtung um ihre konstruktive Hauptachse, insbesondere um ihre Symmetrieachse, erfassten Drehwinkels und/oder einer erfassten Drehrichtung. Die Einrichtung ist zur insbesondere lösbaren Befestigung an einer Antriebswelle, an einem (axialen) Wellenende oder an einem Stellanschluss eines Stellantriebs eingerichtet.

Weiterhin betrifft die Erfindung einen Stellantrieb für eine Klappe oder für ein Ventil, insbesondere für HLK-Anwendungen (HLK für Heizung, Lüftung, Klimatechnik). Die Stellantriebe können auch als Klappenantriebe, Drehantriebe, Drehstellantriebe oder auch als Ventilantriebe bezeichnet werden. Sie finden Einsatz in der Gebäudeautomatisierung. Ein derartiger Antrieb umfasst einen Motor, insbesondere einen Elektromotor, ein nachgeschaltetes Getriebe und einen Stellanschluss zum Anschliessen der Klappe oder des Ventils. Weiter weist der Stellantrieb eine Motorsteuereinheit und eine damit verbundene Steuerungseinheit zum Einstellen eines empfangenen Stellwinkel-Sollwertes am Stellanschluss mittels der Motorsteuereinheit auf.

Der Stellantrieb weist einen elektrischen Anschluss zum Anschliessen des Stellantriebs an einer externen Steuerleitung auf, wobei die externe Steuerleitung zur Energieversorgung des Stellantriebs und zum Empfangen des von der Steuerleitung empfangenen Stellwinkel-Sollwertes vorgesehen ist.

Alternativ oder zusätzlich zum elektrischen Anschluss weist der Stellantrieb einen (elektrischen) Energiespeicher zur autarken Energieversorgung des Stellantriebs sowie eine Funkdatenschnittstelle zum Empfangen des Stellwinkel-Sollwerts auf. Der Energiespeicher kann eine elektrische Primärzelle sein, wie eine Batterie, vorzugsweise eine Lithiumbatterie. Der elektrische Energiespeicher kann auch eine Sekundärzelle sein, wie ein Akkumulator, vorzugsweise ein Lithium-Ionen-Akkumulator. Die Funkdatenschnittstelle ist z.B. eine GSM-, WLAN- oder Bluetooth-Datenschnittstelle. Der empfangene Stellwinkel-Sollwert kann von einer übergeordneten zentralen Steuereinheit oder von einer Leitstelle stammen.

Aus dem Stand der Technik ist eine externe Hilfsschalterbaugruppe von der Firma Siemens (Produkt ASC77.1E und ASC77.2E) zur Anbringung an einem Stellanschluss eines Stellantrieb, insbesondere an einem Stellanschluss eines Klappenantriebs, bekannt. Die Hilfsschalterbaugruppe kann auch bereits im Stellantrieb integriert sein. Es sind Schaltpunkte beliebig über einen vorgegebenen Drehwinkelbereich von 5° bis 90° in 5°-Schritten wählbar. Die aktuelle Klappenstellung ist über Positionsanzeiger gut sichtbar.

Eine Klappe wird zum Öffnen und Unterbrechen eines Luftstroms innerhalb der Lüftung eines Gebäudes verwendet. Der Stellantrieb ist mechanisch mit der Klappe verbunden. Er übt ein Drehmoment auf die Klappe aus, die diese öffnet und den Luftstrom unterbricht. Der Stellantrieb ist dabei mit einer Gebäudeautomationssteuerung (Steuerzentrale) verbunden, welche die Steuersignale zur Regelung des Luftstroms bereitstellt.

Ein häufiges Problem bei der Installation eines Stellantriebs ist die abschliessende Überprüfung der elektrischen Verdrahtung eines Stellantriebs durch einen Installateur. Hierzu sendet er ein Öffnungs- oder Schliesssignal von der Gebäudeautomationssteuerung an den Stellantrieb. Der Installateur überprüft den erfolgreichen Empfang des Signals und die Funktion dieses Stellantriebs, indem er die Drehung des Stellanschlusses des Stellantriebs oder der Klappe selbst betrachtet. Da der eigentliche Stellbetrieb solcher Stellantriebe eine sehr lange Zeit in Anspruch nehmen kann (z.B. 150 Sekunden für 90 Grad), ist die Drehung des Stellanschlusses durch "blosses Hinsehen" selbst nur sehr schwer erkennbar, trotz der am Stellanschluss gut sichtbaren Positionsanzeiger. Hinzu kommt, dass die Stellantriebe in den meisten Fällen bei der Funktionsprüfung bereits am Lüftungskanal im Deckenbereich verbaut sind, so dass aufgrund der grossen Distanz zum Stellantrieb die Stellbewegungen noch schwieriger erkennbar sind.

Um sicher zu sein, dass der Stellantrieb das Signal auch wirklich erfolgreich empfangen hat, muss der Installateur abwarten, bis sich der Stellanschluss eines Stellantriebs, insbesondere eines Klappenantriebs, sichtbar um einige Grad gedreht hat. Dies kann nachteilig etliche Sekunden dauern.

Bei bestimmten Anwendungen erfordert die Gebäudeautomationssteuerung ein elektrisches Signal der aktuellen Position der Klappe mit einer hohen Auflösung (z.B. 0 bis 10 V). Bei bestimmten Typen von Klappenantrieben ist es regelungstechnisch erforderlich, dass der Regler des Stellantriebs die Position des Antriebs innerhalb seines Arbeitsbereichs kennt. Um eine hochauflösende Rückmeldung der Klappenstellung zu erhalten, verfügen besondere Stellantriebstypen über ein eingebautes "True-Position"-Potentiometer. Letzteres ist mit dem Getriebe verbunden und gibt ein elektrisches Signal an die Gebäudeautomationssteuerung oder den Regler des Stellantriebs zurück.

Ein Problem dabei ist, dass es sich hier um eine indirekte Messung des Klappenantriebs handelt. Die Drehung der Klappe selbst ist nicht geprüft. Ist die mechanische Verbindung zwischen dem Stellanschluss des Stellantriebs und der anzutreibenden Antriebswelle der Klappe nicht ordnungsgemäss (wie z.B. mit Schlupf oder Antriebswelle dreht durch), so ist die Installation des Klappenantriebs fehlerhaft. Dies verursacht nachteilig hohe Ausfallzeiten und Folgekosten.

Bei weiteren häufigen Anwendungen erfordert die Gebäudeautomationssteuerung ein elektrisches Signal, wenn die Klappe eine bestimmte Position innerhalb ihres Arbeitsbereichs erreicht hat. Derzeit ist das erfolgreiche Erreichen eines der vordefinierten Punkte durch einen elektromechanischen Schalter mittels einer im Stellantrieb angeordneten Hilfsschaltereinheit oder extern mittels der beispielhaften Hilfsschaltereinheit der Firma Siemens (Produkt ASC77.1 E) möglich. Mittels der internen Hilfsschaltereinheit ist ebenfalls nur eine indirekte Messung der angetriebenen Klappe möglich.

Es ist daher Aufgabe der vorliegenden Erfindung, eine besonders einfach handhabbare, aber dennoch zuverlässige Einrichtung der obengenannten Art anzugeben.

Es ist eine weitere Aufgabe der Erfindung, einen zuverlässigeren Stellantrieb anzugeben, der zum Betrieb mit einer derartigen Einrichtung eingerichtet ist.

Die Aufgabe der Erfindung wird durch die Merkmale des Hauptanspruchs gelöst. Vorteile und Ausgestaltungen der Erfindung, die einzeln oder in Kombination miteinander einsetzbar sind, sind Gegenstand der abhängigen Ansprüche.

Erfindungsgemäss weist die Einrichtung eine Ausgabeeinheit sowie eine inertiale Messeinheit auf. Letztere ist in der Einrichtung aufgenommen, wie z.B. in einem Gehäuse, und ist zumindest zur Erfassung einer Rotation um eine Rotationsmessachse der inertialen Messeinheit sowie zur Ausgabe eines der Rotation entsprechenden Sensorsignals eingerichtet. Zudem weist die Einrichtung eine Steuereinheit auf, welche mit der Ausgabeeinheit und der inertialen Messeinheit signal- und/oder datentechnisch verbunden ist und dazu eingerichtet ist, die Ausgabeeinheit zur Ausgabe eines aus dem Sensorsignal abgeleiteten Drehwinkelwerts und/oder einer daraus abgeleiteten Drehrichtungsinformation anzusteuern.

Die inertiale Messeinheit ist insbesondere ein Drehratensensor (Gyroskop) oder ein Beschleunigungssensor, jeweils vorzugsweise in Form eines integrierten elektronischen Bauelements. Insbesondere, jedoch nicht zwingend notwendig, ist der Drehratensensor derart in der Einrichtung aufgenommen, dass eine Rotationsmessachse des Drehratensensors parallel zur konstruktiven Hauptachse verläuft. Weiter insbesondere, jedoch nicht zwingend notwendig, ist der Beschleunigungssensor derart in der Einrichtung aufgenommen, dass zwei seiner orthogonal zueinander ausgerichteten Translationsmessachsen jeweils orthogonal zur konstruktiven Hauptachse der Einrichtung verlaufen. Die Steuereinheit ist vorzugsweise ein Mikrocontroller. Dieser kann zudem mehrere digitale Ein-/Ausgabe-Einheiten und/oder mehrere analoge Ein-/Ausgabe-Einheiten (DAC, ADC) aufweisen. Zudem kann der zuvor beschriebene Drehratensensor, wie z.B. ein dreiachsiger MEMS-Drehratensensor, oder der Beschleunigungssensor, wie z.B. ein dreiachsiger MEMS-Beschleunigungssensor, bereits in einem solchen Mikrocontroller integriert sein. Darüber hinaus kann der Mikrocontroller bereits eine integrierte Datenschnittstelle, wie z.B. eine SPI-Schnittstelle, und/oder eine integrierte Funkdatenschnittstelle, wie z.B. eine Bluetooth-Schnittstelle, vorzugsweise eine BLE-Schnittstelle (BLE für Bluetooth Low Energy) aufweisen.

Nach Befestigung der Einrichtung an einer Antriebswelle, an einem Wellenende oder an einem Stellanschluss eines Stellantriebs können mittels der Einrichtung bereits kleinste Drehbewegungen der Einrichtung um ihre konstruktive Achse detektiert und sofort einem Benutzer angezeigt werden. Dadurch erhält ein Installateur eines Stellantriebs vorteilhaft eine unmittelbare Rückmeldung ohne Wartezeit.

Ist die Einrichtung direkt an der Antriebswelle bzw. an einem (Antriebs-)Wellenende, wie z.B. von einer Lüftungsklappe, angebracht, so ist von einem Benutzer vorteilhaft sofort zuverlässig erkennbar, ob die mechanische Verbindung zwischen dem Stellanschluss des Stellantriebs und der anzutreibenden Antriebswelle der Klappe ordnungsgemäss ist oder nicht.

Nach einer vorteilhaften Ausführungsform weist die Einrichtung ein Gehäuse mit einer zentralen, vorzugsweise kreisförmigen Aussparung zum Hindurchführen der Antriebswelle oder des Wellenendes auf. Die zentrale Öffnung ist zum insbesondere lösbaren Befestigen der Einrichtung an der Antriebswelle oder am Wellenende vorgesehen. Die konstruktive Hauptachse bzw. die Symmetrieachse der Einrichtung verläuft durch die zentrale Aussparung hindurch. Insbesondere verläuft diese durch den Mittelpunkt der vorzugsweise kreisförmigen Aussparung. Dadurch vereinfacht sich die Applizierung der Einrichtung an der Antriebswelle bzw. am Wellenende.

Alternativ dazu kann die Einrichtung aufklappbar ausgebildet sein, um die Einrichtung im Sinne einer Rohrschelle um die Antriebswelle oder um das Wellenende anzubringen.

Nach einer besonders vorteilhaften Ausführungsform weist die Einrichtung ein Gehäuse sowie eine im oder am Gehäuse aufgenommenen Befestigungseinrichtung zum lösbaren Befestigen der Einrichtung an der Antriebswelle oder am Wellenende auf. Die Einrichtung weist insbesondere einen manuell betätigbaren und im Bezug zur konstruktiven Hauptachse der Einrichtung selbstzentrierenden Befestigungsmechanismus auf, der zum lösbaren Befestigen der Einrichtung an der Antriebswelle oder am Wellenende analog einer Irisblende oder eines Lamellenverschlusses einer Kamera eingerichtet bzw. ausgestaltet ist. Durch den zentrierenden Befestigungsmechanismus ist eine besonders einfache, schnelle und mechanisch feste Applizierung der Einrichtung an der Antriebswelle oder am Wellenende möglich.

Einer weiteren Ausführungsform zufolge ist die Ausgabeeinheit eine mit der Steuereinheit signal- und/oder datentechnisch verbundene optische Ausgabeeinheit, insbesondere ein Display. Die Steuereinheit ist dazu eingerichtet, die optische Ausgabeeinheit zur Ausgabe eines dem Drehwinkelwert und/oder eines der Drehrichtungsinformation zugeordneten optischen Signals anzusteuern. Das optische Signal kann z.B. ein grünleuchtendes Blinksignal sein, wenn sich die Einrichtung in einer ersten Drehrichtung, z.B. linksherum, dreht und ein rotleuchtendes Blinksignal sein, wenn sich die Einrichtung in einer zweiten ersten Drehrichtung, z.B. rechtsherum, dreht. Das optische Signal für einen Drehwinkelwert kann z.B. eine dem Winkelwert nach entsprechende Anzahl von leuchtenden konzentrischen Ringen sein.

Nach einer bevorzugten Ausführungsform kann die Einrichtung einen Schaltungsträger, insbesondere eine Leiterplatte, mit einer Mehrzahl von in Umfangsrichtung um die Hauptachse der Einrichtung angeordneten Leuchtdioden aufweisen. Die Leuchtdioden sind Teil der optischen Ausgabeeinheit. Die mit den Leuchtdioden verbundene Steuereinheit ist dazu eingerichtet, die Leuchtdioden zur Ausgabe eines dem Drehwinkelwert zugeordneten Leuchtsegments aus einer in Umfangsrichtung um die Hauptachse aufeinanderfolgenden Anzahl von leuchtend angesteuerten Leuchtdioden anzusteuern.

Alternativ oder zusätzlich kann die Steuereinheit dazu eingerichtet sein, die Leuchtdioden zur Ausgabe eines der Drehrichtungsinformation entsprechenden Lauflichts aus einer in Umfangsrichtung um die Hauptachse aufeinanderfolgenden Anzahl von leuchtend angesteuerten Leuchtdioden anzusteuern.

Die Leuchtdioden können auch als LED-Display, als OLED-Display oder als hintergrundbeleuchtetes LCD, insbesondere als Baueinheit, realisiert sein.

Nach einer weiteren Ausführungsform weist die Einrichtung einen insbesondere kreisscheibenförmigen, im Gehäuse der Einrichtung aufgenommenen Schaltungsträger auf. Der Schaltungsträger ist radial ausserhalb der zentralen Öffnung angeordnet. Auf dem Schaltungsträger ist insbesondere die Steuereinheit und/oder die inertiale Messeinheit angeordnet. Der Schaltungsträger ist insbesondere eine Leiterplatte.

Einer weiteren vorteilhaften Ausführungsform zufolge ist die Steuereinheit dazu eingerichtet, die optische Ausgabeeinheit zur Ausgabe eines der Drehrichtungsinformation entsprechenden Lauflichts derart anzusteuern, dass eine von einem ortsfesten Betrachter wahrgenommene Lauflicht-Umlauffrequenz in einem Bereich von 0.01 bis 5 Umdrehungen pro Sekunde, insbesondere in einem Bereich von 0.5 bis 1 Umdrehung pro Sekunde, liegt.

Dadurch ist die Drehrichtung besonders leicht erkennbar und dies unabhängig von der eigentlichen Umlauflaufgeschwindigkeit der Einrichtung und somit auch unabhängig von der Umlaufgeschwindigkeit der Antriebswelle, des Wellenendes oder des Stellanschlusses des Stellantriebs. Dies ist besonders dann vorteilhaft, wenn die Drehstellbewegungen, wie eingangs beschrieben, sehr lange Zeit in Anspruch nehmen (z.B. 150 Sekunden für 90 Grad), oder wenn die Drehstellbewegungen sehr schnell erfolgen und mehrere Umdrehungen pro Sekunde betragen, wie z.B. bei Stellantrieben mit Spindelantrieben zum Einstellen von linearen Stellwegen.

Alternativ dazu kann die Steuereinheit dazu eingerichtet sein, die optische Ausgabeeinheit zur Ausgabe eines der Drehrichtungsinformation entsprechenden Lauflichts derart anzusteuern, dass eine von einem ortsfesten Betrachter wahrgenommene Lauflicht-Umlauffrequenz umso grösser ist, je grösser eine aus der zeitlichen Änderung des Drehwinkels oder aus dem Sensorsignal der inertialen Messeinheit abgeleitete Umlauffrequenz der Einrichtung um die Hauptachse ist, wobei die Lauflicht-Umlauffrequenz in einem Bereich von 0.1 bis 5 Umdrehungen pro Sekunde liegt.

Das Lauflicht wird dabei vorteilhaft umso schneller, je schneller sich auch die Einrichtung bzw. die damit verbundene Antriebswelle, das damit verbundene Wellenende oder der damit verbundene Stellanschluss des Stellantrieb dreht.

Nach einer weiteren Ausführungsform ist die Ausgabeeinheit eine mit der Steuereinheit signal- und/oder datentechnisch verbundene akustische Ausgabeeinheit. Sie ist insbesondere ein elektroakustischer Wandler, wie z.B. ein Piepser oder ein Lautsprecher. Die Steuereinheit ist dazu eingerichtet, ein dem Drehwinkelwert und/oder der Drehrichtungsinformation zugeordnetes akustisches Signal auszugeben. Das akustische Signal kann z.B. ein Pieps-Signal für eine erste Drehrichtung und zwei Pieps-Signale für eine zweite Drehrichtung umfassen. Es kann auch eine Sprachnachricht sein, wie z.B. "rechts" oder "links", oder "10 Umdrehungen pro Minuten".

Einer weiteren Ausführungsform zufolge ist die Ausgabeeinheit eine mit der Steuereinheit datentechnisch verbundene kontaktlos arbeitende Datenschnittstelle. Die kontaktlos arbeitende Datenschnittstelle weist insbesondere eine Funkeinheit, eine Ultraschall-Sende-/Empfangseinheit oder eine Infrarot-Sende-/Empfangseinheit auf. Die kontaktlos arbeitende Datenschnittstelle ist dazu eingerichtet, ein dem Drehwinkelwert und/oder der Drehrichtungsinformation zugeordnetes Drahtlossignal auszugeben. Dadurch ist eine Übertragung und Ausgabe des Drehwinkelwerts und/oder der Drehrichtungsinformation auf einem entsprechend eingerichteten Kommunikationsendgerät möglich, wie z.B. auf einem Smartphone oder auf einem Tablet. Die Funkeinheit kann z.B. eine auf einem Bluetooth-, GSM- oder WLAN-Standard basierende Funkdatenschnittstelle sein.

Nach einer Ausführungsform ist die Ausgabeeinheit eine mit der Steuereinheit datentechnisch verbundene kabelgebundene Datenschnittstelle. Die kabelgebundene Datenschnittstelle umfasst einen Schnittstellenanschluss, insbesondere eine Buchse oder einen Stecker. Die kabelgebundene Datenschnittstelle ist dazu eingerichtet, ein dem Drehwinkelwert und/oder der Drehrichtungsinformation zugeordnetes elektrisches Datensignal am Anschluss auszugeben. Dadurch ist eine Übertragung des Drehwinkelwerts und/oder der Drehrichtungsinformation auf einem entsprechend eingerichteten Stellantrieb möglich. Der empfangene Drehwinkelwert und/oder die empfangene Drehrichtungsinformation kann z.B. durch eine Steuerungseinheit des Stellantriebs eingelesen und als Feedbackgrösse für den Stellbetrieb des Stellantriebes herangezogen werden. Der Schnittstellenanschluss kann z.B. eine USB-Buchse sein. Die Datenschnittstelle kann z.B. eine SPI- oder USB-Schnittstelle sein. Der Schnittstellenanschluss kann auch als ein aus der Einrichtung herausgeführtes Kabel mit einem entsprechenden Endstecker realisiert sein. Die zuvor beschriebene Ausführungsform ist insbesondere für Stellantriebe mit einem maximalen Drehstellbereich von 360°, insbesondere von 90° ± 10°, vorteilhaft.

Einer weiteren Ausführungsform zufolge weist die inertiale Messeinheit einen Drehratensensor auf, insbesondere einen MEMS-Vibrationskreisel, mit einer einzigen Rotationsmessachse oder mit jeweils vorzugsweise orthogonal zueinander ausgerichteten zwei oder drei Rotationsmessachsen. Alternativ oder zusätzlich kann die inertiale Messeinheit einen Beschleunigungssensor aufweisen, insbesondere einen MEMS-Beschleunigungssensor, mit einer einzigen Translationsmessachse oder mit jeweils vorzugsweise orthogonal zueinander ausgerichteten zwei oder drei Translationsmessachsen. Derartige Messeinheiten sind als integrierte Bauelemente äusserst kompakt und durch den Einsatz in Smartphones in grosser Typenvielfalt erhältlich.

Nach einer Ausführungsform ist die Steuereinheit dazu eingerichtet, auf eine benutzerseitige Eingabe hin jeweils einen aktuellen Drehwinkelwert als Winkelsollwert in einem nichtflüchtigen Speicher der Einrichtung abzuspeichern oder einen jeweiligen bereits abgespeicherten Winkelsollwert zu löschen. Zur benutzerseitigen Eingabe kann die Einrichtung z.B. einen Taster oder zwei Taster aufweisen. Es können somit auch mehrere Winkelsollwerte abgespeichert oder gelöscht werden. Die Winkelsollwerte korrespondierenden z.B. mit überwachungsbedürftigen Schaltpunkten, deren Überschreitung Folgeaktionen auslösen können, wie z.B. den Stopp des Stellantriebs.

Insbesondere ist die Steuereinheit dann dazu eingerichtet, einen aktuellen Drehwinkelwert mit einem jeweiligen Winkelsollwert zu vergleichen sowie eine dem aktuellen Drehwinkelwert zugeordnete Erreicht-Meldung durch die Ausgabeeinheit auszugeben, falls der aktuelle Drehwinkelwert mit einem der jeweiligen abgespeicherten Winkelsollwerte übereinstimmt. Dadurch ist ein unmittelbares Feedback an einen Installateur einer Anlage mit einem Stellantrieb möglich, an dem eine erfindungsgemässe Einrichtung angebracht ist.

Die Aufgabe der Erfindung wird weiter mit einem Stellantrieb gelöst, der wie eingangs beschrieben einen Motor, insbesondere einen Elektromotor, ein nachgeschaltetes Getriebe und einen Stellanschluss zum Anschliessen der Klappe oder des Ventils aufweist. Weiter weist der Stellantrieb eine Motorsteuereinheit und eine damit verbundene Steuerungseinheit zum Einstellen eines empfangenen Stellwinkel-Sollwerts am Stellanschluss mittels der Motorsteuereinheit auf. Der Stellantrieb kann bekanntermassen einen elektrischen Anschluss zum Anschliessen des Stellantriebs an einer externen Steuerleitung umfassen. Die externe Steuerleitung ist dabei zur Energieversorgung des Stellantriebs sowie zum Empfangen des von der externen Steuerleitung empfangenen Stellwinkel-Sollwerts vorgesehen. Alternativ oder zusätzlich dazu kann der Stellantrieb einen Energiespeicher zur (autarken) Energieversorgung des Stellantriebs sowie eine Funkdatenschnittstelle zum Empfangen des Stellwinkel-Sollwerts aufweisen.

Erfindungsgemäss weist der Stellantrieb einen mit der Steuerungseinheit verbundenen weiteren elektrischen Anschluss zur Energieversorgung sowie zum Empfang eines Drehwinkelwerts von einer angeschlossenen erfindungsgemässen Einrichtung auf. Alternativ oder zusätzlich kann der Stellantrieb eine mit der Steuerungseinheit verbundene Funkeinheit zum Empfang eines Drehwinkelwerts von einer angeschlossenen erfindungsgemässen Einrichtung aufweisen. In beiden vorgenannten Fällen ist die Steuerungseinheit des Stellantriebs dazu eingerichtet, einen empfangenen Drehwinkelwert als Stellwinkel-Istwert für das Einstellen des empfangenen Stellwinkel-Sollwerts SET_{α} am Stellanschluss als Feedbackgrösse heranzuziehen. Durch den empfangenen Stellwinkel-Sollwerts SET_{α} ist vorteilhaft eine exaktere Einstellung der Drehstellung am Stellanschluss mittels der Motorsteuereinheit des Stellantriebs möglich.

Schliesslich weist der Stellantrieb die mit der Steuerungseinheit verbundene Funkeinheit zum Empfang des Drehwinkelwerts auf. Die Funkeinheit ist zur induktiv gekoppelten Energieversorgung über eine Luftschnittstelle hinweg eingerichtet. Eine hierfür erforderliche Spule kann z.B. koaxial zum Stellanschluss im Stellantrieb angeordnet sein.

Dadurch ist bei der erfindungsgemässen Einrichtung kein Energiespeicher, wie z.B. Batterie, zum Betrieb der Einrichtung erforderlich. Zur induktiv gekoppelten Energieübertragung kann in der Einrichtung eine Spule eingebracht sein. Die Spule kann auch als Leiterplattenspule auf dem Schaltungsträger der Einrichtung realisiert sein.

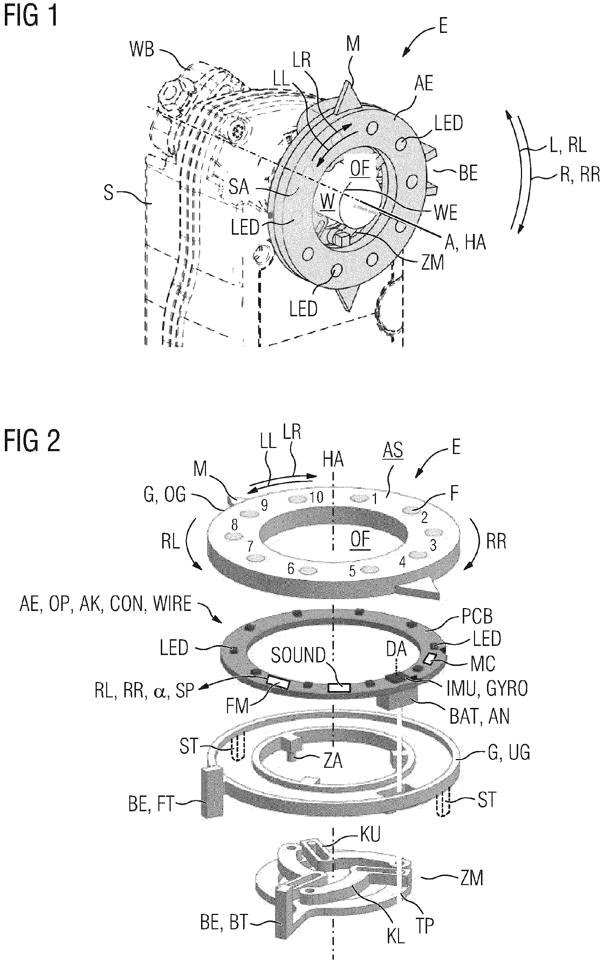

Weitere Vorteile, Merkmale und Einzelheiten der Erfindung ergeben sich aus der nachfolgenden Beschreibung, in der unter Bezugnahme auf die Zeichnungen Ausführungsbeispiele der Erfindung im Einzelnen beschrieben sind. Dabei können die in den Ansprüchen und die in der Beschreibung erwähnten Merkmale jeweils einzeln für sich oder in beliebiger Kombination erfindungswesentlich sein. Elemente mit gleicher Funktion und Wirkungsweise sind in den Figuren 1 bis 5 jeweils mit denselben Bezugszeichen versehen. Es zeigen schematisch:
- FIG 1: ein Beispiel für eine erfindungsgemässe Einrichtung, angeordnet auf einem Wellenende einer durch einen Stellantrieb hindurchgeführten Antriebswelle,
- FIG 2: den Aufbau der erfindungsgemässen Einrichtung in einer Explosionsdarstellung,
- FIG 3: eine beispielhafte Ausführungsform der Einrichtung in einer Draufsicht gemäss der Erfindung,
- FIG 4: einen beispielhaften Stellantrieb mit einer elektrischen Schnittstelle für einen Stellbetrieb mit einer derartigen Einrichtung gemäss der Erfindung, und
- FIG 5: einen beispielhaften Stellantrieb mit einer Funkeinheit für einen erweiterten Stellbetrieb mit einer derartigen Einrichtung gemäss der Erfindung.

FIG 1 zeigt ein Beispiel für eine erfindungsgemässe Einrichtung E, angeordnet auf einem axialen Wellenende WE einer durch einen Stellantrieb S hindurchgeführten Antriebswelle W. Der Stellantrieb S selbst ist gestrichelt dargestellt. Die gezeigte Einrichtung E ist mittels einer Befestigungseinrichtung BE mit einem selbstzentrierenden Befestigungsmechanismus ZM lösbar auf dem Wellenende WE angebracht. Die Befestigungseinrichtung BE ist in der FIG 2 im Detail zu sehen. Mit WB ist ein Befestigungselement zur Befestigung der Antriebswelle W, wie z.B. zum Antreiben einer Lüftungsklappe, am Stellantrieb S bezeichnet. Mit dem Bezugszeichen A ist eine Stellachse des Stellantriebs S zum Einstellen von Drehbewegungen eines Stellanschlusses SA um die Stellachse A herum bezeichnet. Im Beispiel der FIG 1 fluchtet bereits die Stellachse A mit einer konstruktiven Hauptachse HA bzw. Symmetrieachse der Einrichtung E. Die Einrichtung E ist somit konzentrisch zur Stellachse A des Stellantriebs S ausgerichtet. Zudem weist die Einrichtung E bereits ein Gehäuse G mit einer zentralen kreisförmigen Aussparung OF zum Hindurchführen des axialen Wellenendes WE auf. Das Gehäuse G weist weiter zwei sich im Bezug zur konstruktiven Hauptachse HA radial gegenüberliegende Markierungen M bzw. Positionszeiger auf, um einen Benutzer die aktuelle Drehstellung anzuzeigen. Mit AE ist hier eine optische Ausgabeeinheit bezeichnet, die beispielhaft zehn in Umfangsrichtung um die konstruktiv Hauptachse HA herum gleichmässig verteilte Leuchtdioden LED umfasst. Die Leuchtdioden LED sind derart in der Einrichtung E angeordnet, dass sie weg von der Einrichtung E in Richtung zu einem Benutzer abstrahlen.

Mit den Bezugszeichen L, R sind allgemein Drehrichtungen des Stellanschlusses SA und somit auch Drehbewegungen L, R der am Stellanschluss SA befestigten Antriebswelle W bzw. des axialen Wellenendes WE um die Stellachse A bezeichnet. Letztlich sind damit auch die zu erfassenden Drehbewegungen L, R der am Stellanschluss SA bzw. an der Antriebwelle W bzw. am Wellenende WE fest angebrachten Einrichtung E bezeichnet. Mit RL, RR sind die mittels der erfindungsgemässen Einrichtung E sensorisch zugeordneten Drehrichtungsinformationen um die konstruktive Hauptachse HA der Einrichtung E herum bezeichnet. Im Falle keiner Verbindung zwischen Einrichtung E und Antriebswelle W bzw. Stellanschluss SA sind die Drehrichtung L, R und die sensorische Drehrichtungsinformationen RL, RR voneinander verschieden.

Die gezeigte Einrichtung E ist gemäss der Erfindung somit zur Ausgabe eines mittels der Einrichtung E um ihre konstruktive Hauptachse HA erfassten Drehwinkels und/oder einer erfassten Drehrichtung L, R eingerichtet.

FIG 2 zeigt den Aufbau der erfindungsgemässen Einrichtung E in einer Explosionsdarstellung. Zwischen einem oberen und unterem Gehäuse OG, UG des Gehäuses G ist ein kreisring-, ggf. kreisringsektorförmiger Schaltungsträger PCB aufgenommen. Die Ebene des Schaltungsträgers PCB ist orthogonal zur konstruktiven Hauptachse HA der Einrichtung E angeordnet.

Auf dem Schaltungsträger PCB sind die beispielhaft zehn Leuchtdioden LED aus der FIG 1 als optische Ausgabeeinheit OP, eine inertiale Messeinheit IMU, ein Mikrocontroller MC als Steuereinheit der Einrichtung E, eine Batterie BAT zur elektrischen Energieversorgung, ein elektrischer Anschluss AN als kabelgebundene Datenschnittstelle WIRE, eine akustische Ausgabeeinheit AK in Form eines Buzzers SOUND, eine Funkeinheit FM als kontaktlose Datenschnittstelle CON angeordnet. Die Funkeinheit FM ist zur drahtlosen Ausgabe einer erfassten Drehrichtungsinformation RL, RR, eines erfassten Drehwinkelwertes α sowie von Erreicht-Meldungen SP mittels der erfindungsgemässen Einrichtung E eingerichtet.

Die inertiale Messeinheit IMU ist im vorliegenden Beispiel ein einachsiger Drehratensensor GYRO. Mit DA ist eine Rotationsmessachse des Drehratensensors GYRO bezeichnet. Die Rotationsmessachse DA ist parallel zur konstruktiven Hauptachse HA der Einrichtung E ausgerichtet. Zur Ausführung der vorliegenden Erfindung ist eine einachsige Rotationsmessachse DA ausreichend, sofern eine vektorielle Komponente der Rotationsachse DA parallel zur konstruktiven Hauptachse HA verläuft. Eine exakte Ausrichtung der Rotationsachse DA ist somit nicht erforderlich.

Im unteren Teil der FIG 2 ist im Detail der im Gehäuse G aufgenommene selbstzentrierende Befestigungsmechanismus ZM dargestellt. Er umfasst eine Trägerplatte TP, auf der drei Klemmelemente KL schwenkbar beweglich gelagert sind. Die Klemmelemente KL weisen zudem jeweils eine Kulisse KU auf, in die jeweils ein Zapfen ZA an der Unterseite des Gehäuseunterteil UG eingreift. Ein nicht gezeigtes vorgespanntes Federelement wirkt auf die drei Klemmenelemente KL so ein, dass diese im Bezug zur konstruktiven Hauptachse HA radial nach innen gepresst werden. Durch manuelles Zusammendrücken eines feststehenden und eines beweglichen Teils FT, BT der Befestigungseinrichtung BE öffnet sich der selbstzentrierende Befestigungsmechanismus ZM zur Anbringung der Einrichtung E auf einer Antriebswelle W oder an einem axialen Wellenende WE einer Antriebswelle W. Die Selbstzentrierung wird durch die drei in Umfangsrichtung verteilt angeordneten Klemmelemente KL erreicht. Mit ST sind ferner vom Gehäuseunterteil UG wegzeigende Stifte ST bezeichnet, die in entsprechende Öffnungen in einem Stellanschluss SA eines entsprechend hierzu eingerichteten Stellantriebs S zur Befestigung der Einrichtung E fixierend eingreifen können.

Im oberen Teil der FIG 2 ist die Gehäuseoberseite OG gezeigt. Mit AS ist die Ansichtsseite bzw. die Abstrahlseite der Einrichtung E in Bezug auf die Leuchtdioden LED bezeichnet. Letzteren liegt jeweils ein transparentes Fenster F im Gehäuse G gegenüber. Die Steuereinheit MC der Einrichtung E ist dazu eingerichtet, die optische Ausgabeeinheit OP, also die zehn Leuchtdioden LED, zur Ausgabe eines der erfassten Drehrichtungsinformation RL, RR entsprechenden Lauflichts LL, LR anzusteuern. Dies erfolgt in der Weise, dass eine von einem ortsfesten Betrachter wahrgenommene Lauflicht-Umlauffrequenz in einem Bereich von 0.01 bis 5 Umdrehungen pro Sekunde, insbesondere in einem Bereich von 0.5 bis 1 Umdrehung pro Sekunde, liegt. Es können dabei eine, aber auch mehrere in Umfangsrichtung aufeinanderfolgende Leuchtdioden LED derart angesteuert werden, dass für den Benutzer ein angenehmes umlaufenden Lauflicht LL, LR in die eine oder in die entgegensetzte Drehrichtung resultiert.

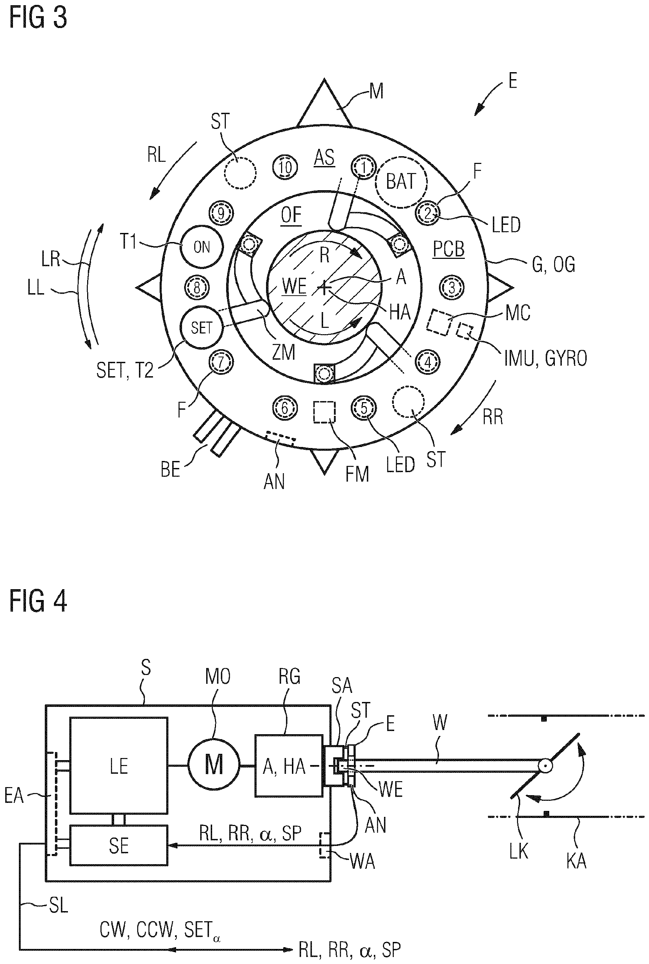

FIG 3 zeigt eine beispielhafte Ausführungsform der Einrichtung E in einer Draufsicht gemäss der Erfindung. In dieser Darstellung ist der Aufbau und die Funktionsweise des selbstzentrierenden Befestigungsmechanismus ZM gut erkennbar. In der FIG 3 sind zudem zwei benutzerseitige Eingabemittel T1, T2 in Form von Tastern vorhanden. Der erste Taster T1 dient beispielhaft zum Ein- und Ausschalten der erfindungsgemässen Einrichtung E. Der zweite Taster T2, SET dient dazu, einen jeweils aktuellen Drehwinkelwert α als Winkelsollwert in einem nichtflüchtigen Speicher der Einrichtung E abzuspeichern oder einen jeweiligen bereits abgespeicherten Winkelsollwert durch Überschreiben zu löschen. Der nichtflüchtige Speicher, insbesondere ein EEPROM oder Flashspeicher, kann z.B. im Mikrocontroller MC der Einrichtung E integriert sein.

FIG 4 zeigt einen beispielhaften Stellantrieb S mit einer elektrischen Schnittstelle WA für einen Stellbetrieb mit einer derartigen Einrichtung E gemäss der Erfindung. Im rechten Teil der FIG 4 ist schematisch ein Lüftungskanal KA zu sehen, der mittels einer Lüftungsklappe LK schliessbar ist. Letztere wird über eine durch den Stellantrieb S antreibbare Antriebswelle W eingestellt. Der Stellantrieb S weist zudem ein Getriebe RG, insbesondere ein Reduziergetriebe, sowie einen Motor MO zum Antreiben des Getriebes RG auf. Der Motor MO wird durch eine Motorsteuereinheit LE leistungsmässig angesteuert, die ihrerseits von der Steuerungseinheit SE des Stellantriebs S elektrisch angesteuert wird. Sowohl Steuereinrichtung SE als auch Motorsteuereinheit LE sind mit einem stellantriebsseitigen elektrischen Steueranschluss EA verbunden, um über eine angeschlossene Steuerleitung SL den Stellantrieb S mit elektrischer Energie zu versorgen und um Steuerbefehle CW, CCW, SET_{α} von einer angeschlossenen Gegenstelle, insbesondere von einer Steuerzentrale CONTROL bzw. Gebäudeautomationssteuerung, zu empfangen. Mit CW ist ein Steuerbefehl für eine Drehung in Uhrzeigerrichtung (CW für clockwise), mit CCW ein Steuerbefehl für eine Drehung in Gegenuhrzeigerrichtung (CCW für counterclockwise) und mit SET_{α} ein Stellwinkel-Sollwert für den Stellbetrieb bezeichnet. Letzterer wird typischerweise von einer übergeordneten Steuerzentrale CONTROL ermittelt und an den Stellantrieb S ausgegeben.

Gemäss der Erfindung weist die Einrichtung E einen elektrischen Anschluss AN auf, um über diesen eine aktuelle erfasste Drehrichtungsinformation RL, RR, einen aktuell erfassten Drehwinkelwert α und ggf. eine Erreicht-Meldung SP an eine Steuerungseinheit SE des Stellantriebs S zu übertragen. Die empfangene Daten RL, RR, α, SP können auch über den Steueranschluss EA an eine angeschlossene Steuerzentrale CONTROL zu Überwachungszwecken ausgegeben werden. Zum Empfangen der vorgenannten Daten von der Einrichtung E verfügt der Stellantrieb S über einen weiteren elektrische Anschluss WA in Form einer Buchse. Der elektrische Anschluss AN der Einrichtung E und der weitere Anschluss WA können somit über ein entsprechendes Schnittstellenkabel sowohl datentechnisch als auch zur Energieversorgung der Einrichtung E über den Stellantrieb S verbunden werden. Gemäss der Erfindung ist der Stellantrieb S mittels der Steuerungseinheit SE dazu eingerichtet, einen empfangenen Drehwinkelwert α als Stellwinkel-Istwert für das Einstellen des empfangenen Stellwinkel-Sollwert SET_{α} am Stellanschluss SA als Feedbackgrösse heranzuziehen.

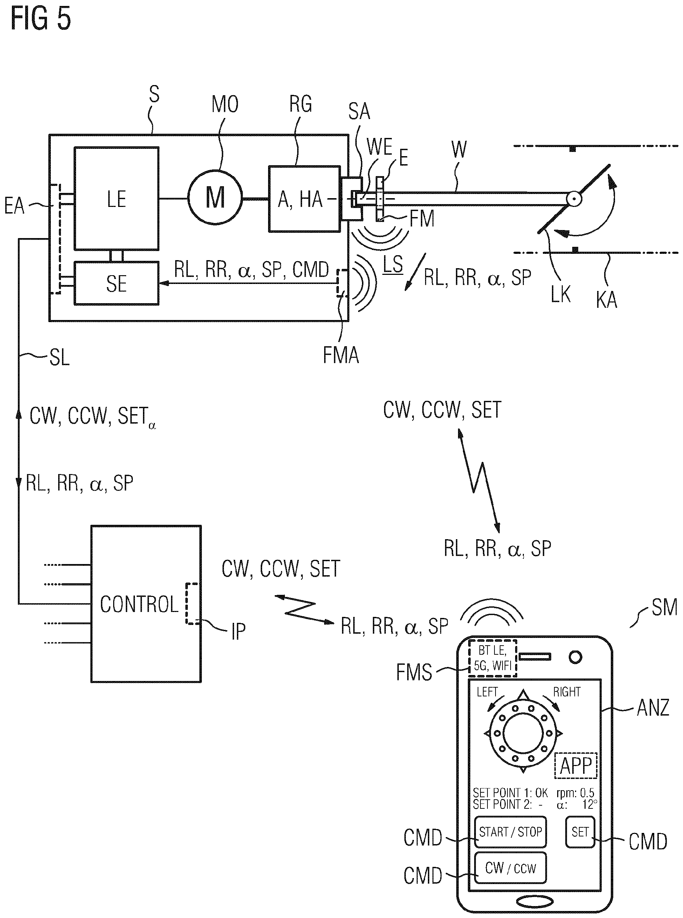

Schliesslich zeigt FIG 5 einen beispielhaften Stellantrieb S mit einer Funkeinheit FMA für einen erweiterten Stellbetrieb mit einer derartigen Einrichtung E gemäss der Erfindung. Die vorliegende FIG 5 unterscheidet sich zunächst von der vorherigen FIG 4 dadurch, dass anstelle der elektrischen Verbindung WA, AN zwischen dem Stellantrieb S und der erfindungsgemässen Einrichtung E eine über eine Luftschnittstelle LS wirkende drahtlose Schnittstelle FMA, FM zum Einsatz kommt. Mit FMA ist dabei eine Funkeinheit des Stellantriebs S und mit FM eine darauf abgestimmte Funkeinheit der erfindungsgemässen Einrichtung E bezeichnet. Beide können z.B. auf einem Bluetooth-, WLAN-, ZigBee-, oder NFC-Standard basieren.

Im rechten unteren Teil der FIG 5 ist ein mobiles Kommunikationsendgerät SM in Form eines Smartphones zu sehen, welches mittels eines darauf gespeicherten Computerprogramms APP, d.h. einer App, dazu eingerichtet ist, über eine Funkdatenschnittstelle FMS des Smartphones SM mit der erfindungsgemässen Einrichtung E, mit dem Stellantrieb S oder mit der übergeordneten Steuerzentrale CONTROL zu kommunizieren. Im ersten und zweiten Fall erfolgt die Datenkommunikation vorzugsweise über ein Bluetooth- oder WLAN-Verbindung und im dritten Fall über eine Interverbindung, wie z.B. über eine GSM- oder WLAN-Verbindung. Mit IP ist eine zugehörige IP-Schnittstelle der Steuerzentrale CONTROL bezeichnet.

Auf einer Anzeige ANZ des Smartphones SM können eine aktuelle Drehwinkelinformation RL, RR, ein aktueller Drehwinkelwert α sowie ggf. eine Erreicht-Meldung SP entweder direkt von der erfindungsgemässen Einrichtung E mittels Funkeinheit FM der Einrichtung E, indirekt über den Stellantrieb S mittels der Funkeinrichtung FMA des Stellantriebs S oder doppelt indirekt über den Stellantrieb S und weiter über die mit dem Stellantrieb S über die Steuerleitung SL verbundene Steuerzentrale CONTROL empfangen und auf der Anzeige ANZ dargestellt werden, beispielhaft symbolisiert durch ein Abbild der erfindungsgemässen Einrichtung E auf der Anzeige ANZ. Auf umgekehrten Wege können direkt, indirekt oder auch doppelt indirekt Steuerbefehle für eine Drehung in Uhrzeigerrichtung CW, für eine Drehung in Gegenuhrzeigerrichtung CCW und für ein Abspeichern eines aktuellen Drehwinkelwerts α als Winkelsollwert SET, z.B. für eine Endlagenüberwachung des Stellantriebs S, an den Stellantrieb S bzw. an die erfindungsgemässe Einrichtung E ausgegeben werden. Mit CMD sind sogenannten Softtasten zur benutzerseitigen Eingabe der Steuerbefehle CW, CCW, SET auf der Anzeige ANZ des Smartphones SM bezeichnet.

### Bezugszeichenliste

- α: Drehwinkelwert
- A: Stellachse
- AE: Ausgabeeinheit
- AK: akustische Ausgabeeinheit
- AN: erste elektrische Schnittstelle, Anschluss, Stecker, Buchse
- ANZ: Anzeige, Display
- APP: App, Computerprogramm
- AS: Abstrahlseite, Ansichtsseite
- BAT: Energiespeicher, Batterie
- BE: Befestigungseinrichtung
- BT: bewegliches Teil der Befestigungseinrichtung
- CW: Steuerbefehl für Drehung in Uhrzeigerrichtung
- CCW: Steuerbefehl für Drehung in Gegenuhrzeigerrichtung
- CMD: Softtaste, Eingabetaste
- CON: kontaktlose Schnittstelle
- CONTROL: Steuerzentrale, Gebäudeautomationssteuerung
- DA: Rotationsmessachse, Sensorachse
- E: Einrichtung, Bewegungsanzeige
- EA: elektrischer Anschluss, Steueranschluss
- F: Fenster, Sichtfenster
- FM: Funkeinheit der Einrichtung
- FMA: Funkeinheit des Stellantriebs
- FMS: Funkeinheit des Smartphones
- FT: festes Teil der Befestigungseinrichtung
- G: Gehäuse, Kunststoffgehäuse
- GYRO: Drehratensensor, Gyroskop
- HA: konstruktive Hauptachse, Symmetrieachse
- IMU: inertiale Messeinheit
- IP: Datenschnittstelle, IP-Schnittstelle
- KA: Lüftungskanal, Entrauchungskanal
- KL: Klemmelement
- KU: Kulisse
- L: erste Drehrichtung der Einrichtung, der Antriebswelle, des Stellanschlusses, linksherum
- LE: Motorsteuereinheit, Leistungselektronik
- LED: Lichtemitter, Leuchtdiode, LED
- LK: Lüftungsklappe, Brandschutzklappe
- LL, RL: Lauflicht
- LS: Luftschnittstelle
- M: Markierung, Pfeilmarkierung
- MC: Steuereinheit, Mikrocontroller
- MO: Antriebselement, Motor
- OF: zentrale Aussparung, Öffnung
- OG: oberes Gehäuseteil
- OP: optische Ausgabeeinheit
- PCB: Schaltungsträger, Leiterplatte
- R: zweite Drehrichtung der Einrichtung, der Antriebswelle, des Stellanschlusses, rechtsherum
- RG: Getriebe, Reduziergetriebe
- RL: erste Drehrichtungsinformation, linksherum
- RR: zweite Drehrichtungsinformation, rechtsherum
- S: Stellantrieb, Aktuator
- SA: Stellanschluss
- SE: Steuerungseinheit
- SET: Steuerbefehl zum Abspeichern eines aktuellen Drehwinkelwerts als Winkelsollwert, SET-Taste
- SET_{α}: Stellsollwinkel, Stellwinkel-Sollwert
- SL: Steuerleitung
- SM: mobiles Kommunikationsendgerät, Smartphone
- SOUND: Sounder, Lautsprecher, Piepser
- SP: Erreicht-Meldung
- ST: Stift, Befestigungselement
- T1, T2: Eingabeelemente, Taster
- TP: Trägerplatte
- UG: unteres Gehäuseteil
- W: Antriebswelle, Welle
- WA: weitere elektrische Schnittstelle, Anschluss
- WB: Befestigungselement für Antriebswelle
- WE: Wellenende, axiales Wellenende
- WIRE: kabelgebundene Datenschnittstelle
- ZA: Zapfen, Aufnahmeelement
- ZM: selbstzentrierender Befestigungsmechanismus

## Patentansprüche

1. Einrichtung zur Ausgabe eines mittels der Einrichtung (E) um ihre konstruktive Hauptachse (HA), insbesondere um ihre Symmetrieachse, erfassten Drehwinkels und/oder einer erfassten Drehrichtung (L, R), wobei die Einrichtung (E) zur insbesondere lösbaren Befestigung an einer Antriebswelle (W), an einem Wellenende (WE) oder an einem Stellanschluss (SA) eines Stellantriebs (S) eingerichtet ist, zudem aufweisend
- eine Ausgabeeinheit (AE),
- eine inertiale Messeinheit (IMU, GYRO), welche in der Einrichtung (E) aufgenommen und zumindest zur Erfassung einer Rotation um eine Rotationsmessachse (DA) der inertialen Messeinheit (IMU, GYRO) sowie zur Ausgabe eines der Rotation entsprechenden Sensorsignals eingerichtet ist, und
- eine Steuereinheit (MC), welche mit der Ausgabeeinheit (AE) und der inertialen Messeinheit (IMU, GYRO) signal- und/oder datentechnisch verbunden ist und dazu eingerichtet ist, die Ausgabeeinheit (AE) zur Ausgabe eines aus dem Sensorsignal abgeleiteten Drehwinkelwerts (α) und/oder einer daraus abgeleiteten Drehrichtungsinformation (RL, RR) anzusteuern.

2. Einrichtung nach Anspruch 1, wobei die Einrichtung (E) ein Gehäuse (G) mit einer zentralen, vorzugsweise kreisförmigen Aussparung (OF) zum Hindurchführen der Antriebswelle (W) oder des Wellenendes (WE) sowie zum insbesondere lösbaren Befestigen der Einrichtung (E) an der Antriebswelle (W) oder am Wellenende (WE) aufweist, und wobei die konstruktive Hauptachse (HA) der Einrichtung (E) durch die zentrale Aussparung (OF) hindurch verläuft, insbesondere durch den Mittelpunkt der vorzugsweise kreisförmigen Aussparung (OF).

3. Einrichtung nach Anspruch 1 oder 2, wobei die Einrichtung (E) ein Gehäuse (G) sowie eine im oder am Gehäuse (G) aufgenommene Befestigungseinrichtung (BE) zum lösbaren Befestigen der Einrichtung (E) an der Antriebswelle (W) oder am Wellenende (WE) aufweist, insbesondere einen manuell betätigbaren und im Bezug zur konstruktiven Hauptachse (HA) der Einrichtung (E) selbstzentrierenden Befestigungsmechanismus (ZM), eingerichtet zum lösbaren Befestigen der Einrichtung (E) an der Antriebswelle (W) oder am Wellenende (WE) analog einer Irisblende oder eines Lamellenverschlusses einer Kamera.

4. Einrichtung nach einem der vorherigen Ansprüche, wobei die Ausgabeeinheit (AE) eine mit der Steuereinheit (MC) signal- und/oder datentechnisch verbundene optische Ausgabeeinheit (OP) ist, insbesondere ein Display, und wobei die Steuereinheit (MC) dazu eingerichtet ist, die optische Ausgabeeinheit (AE) zur Ausgabe eines dem Drehwinkelwert (α) und/oder eines der Drehrichtungsinformation (RL, RR) zugeordneten optischen Signals anzusteuern.

5. Einrichtung nach Anspruch 4, aufweisend einen Schaltungsträger (PCB) mit einer Mehrzahl von in Umfangsrichtung um die Hauptachse (HA) der Einrichtung (E) angeordneten Leuchtdioden (LED), wobei die Leuchtdioden (LED) Teil der optischen Ausgabeeinheit (OP) sind und wobei die mit den Leuchtdioden (LED) verbundene Steuereinheit (MC) dazu eingerichtet ist,
- die Leuchtdioden (LED) zur Ausgabe eines dem Drehwinkelwert (α) zugeordneten Leuchtsegments aus einer in Umfangsrichtung um die Hauptachse (HA) aufeinanderfolgenden Anzahl von leuchtend angesteuerten Leuchtdioden (LED) anzusteuern, und/oder
- die Leuchtdioden (LED) zur Ausgabe eines der Drehrichtungsinformation (RL, RR) entsprechenden Lauflichts (LL, LR) aus einer in Umfangsrichtung um die Hauptachse (HA) aufeinanderfolgenden Anzahl von leuchtend angesteuerten Leuchtdioden (LED) anzusteuern.

6. Einrichtung nach Anspruch 4 oder 5, aufweisend einen insbesondere kreisscheibenförmigen, im Gehäuse (G) der Einrichtung (E) aufgenommenen Schaltungsträger (PCB), wobei der Schaltungsträger (PCB) radial ausserhalb der zentralen Öffnung (OF) angeordnet ist und wobei auf dem Schaltungsträger (PCB) insbesondere die Steuereinheit (MC) und/oder die inertiale Messeinheit (IMU, GYRO) angeordnet ist.

7. Einrichtung nach Anspruch 5 oder 6, wobei die Steuereinheit (MC) dazu eingerichtet ist, die optische Ausgabeeinheit (OP) zur Ausgabe eines der Drehrichtungsinformation (RL, RR) entsprechenden Lauflichts (LL, LR) derart anzusteuern,
- dass eine von einem ortsfesten Betrachter wahrgenommene Lauflicht-Umlauffrequenz in einem Bereich von 0.01 bis 5 Umdrehungen pro Sekunde, insbesondere in einem Bereich von 0.5 bis 1 Umdrehung pro Sekunde, liegt, oder
- dass eine von einem ortsfesten Betrachter wahrgenommene Lauflicht-Umlauffrequenz umso grösser ist, je grösser eine aus der zeitlichen Änderung des Drehwinkels oder aus dem Sensorsignal der inertialen Messeinheit (IMU, GYRO) abgeleitete Umlauffrequenz der Einrichtung (E) um die Hauptachse (HA) ist, wobei die Lauflicht-Umlauffrequenz in einem Bereich von 0.1 bis 5 Umdrehungen pro Sekunde liegt.

8. Einrichtung nach einem der vorherigen Ansprüche, wobei die Ausgabeeinheit (AE) eine mit der Steuereinheit (MC) signal- und/oder datentechnisch verbundene akustische Ausgabeeinheit (AK) ist, insbesondere ein elektroakustischer Wandler (SOUND), wobei die Steuereinheit (MC) dazu eingerichtet ist, ein dem Drehwinkelwert (α) und/oder der Drehrichtungsinformation (RL, RR) zugeordnetes akustisches Signal auszugeben.

9. Einrichtung nach einem der vorherigen Ansprüche, wobei die Ausgabeeinheit (AE) eine mit der Steuereinheit (MC) datentechnisch verbundene kontaktlos arbeitende Datenschnittstelle (CON) ist, wobei die kontaktlos arbeitende Datenschnittstelle (CON) eine Funkeinheit (FM), eine Ultraschall-Sende-/Empfangseinheit oder eine Infrarot-Sende-/Empfangseinheit aufweist, und wobei die kontaktlos arbeitende Datenschnittstelle (CON) dazu eingerichtet ist, ein dem Drehwinkelwert (α) und/oder der Drehrichtungsinformation (RL, RR) zugeordnetes Drahtlossignal auszugeben.

10. Einrichtung nach einem der vorherigen Ansprüche, wobei die Ausgabeeinheit (AE) eine mit der Steuereinheit (MC) datentechnisch verbundene kabelgebundene Datenschnittstelle (WIRE) ist, wobei die kabelgebundene Datenschnittstelle (WIRE) einen Schnittstellenanschluss (AN) umfasst, insbesondere eine Buchse oder einen Stecker, und wobei die kabelgebundene Datenschnittstelle (WIRE) dazu eingerichtet ist, ein dem Drehwinkelwert (α) und/oder der Drehrichtungsinformation (RL, RR) zugeordnetes elektrisches Datensignal am Anschluss (AN) auszugeben.

11. Einrichtung nach einem der vorherigen Ansprüche,
- wobei die inertiale Messeinheit (IMU) einen Drehratensensor (GYRO) aufweist, insbesondere einen MEMS-Vibrationskreisel, mit einer einzigen Rotationsmessachse (DA) oder mit jeweils vorzugsweise orthogonal zueinander ausgerichteten zwei oder drei Rotationsmessachsen (DA), und/oder
- wobei die inertiale Messeinheit (IMU) einen Beschleunigungssensor aufweist, insbesondere einen MEMS-Beschleunigungssensor, mit einer einzigen Translationsmessachse oder mit jeweils vorzugsweise orthogonal zueinander ausgerichteten zwei oder drei Translationsmessachsen.

12. Einrichtung nach einem der vorherigen Ansprüche, wobei die Steuereinheit (MC) dazu eingerichtet ist, auf eine benutzerseitige Eingabe (SET) hin jeweils einen aktuellen Drehwinkelwert (α) als Winkelsollwert in einem nichtflüchtigen Speicher der Einrichtung (E) abzuspeichern oder einen jeweiligen bereits abgespeicherten Winkelsollwert zu löschen.

13. Einrichtung nach Anspruch 12, wobei die Steuereinheit (MC) dazu eingerichtet ist, einen aktuellen Drehwinkelwert (α) mit einem jeweiligen Winkelsollwert zu vergleichen sowie eine dem aktuellen Drehwinkelwert (α) zugeordnete Erreicht-Meldung (SP) durch die Ausgabeeinheit (AE) auszugeben, falls der aktuelle Drehwinkelwert (α) mit einem der jeweiligen abgespeicherten Winkelsollwerte übereinstimmt.

14. Stellantrieb für eine Klappe (LK) oder für ein Ventil, mit einem Motor (MO), mit einem nachgeschalteten Getriebe (RG) und mit einem Stellanschluss (SA) zum Anschliessen der Klappe (KL) oder des Ventils, mit einer Motorsteuereinheit (LE) und mit einer damit verbundenen Steuerungseinheit (SE) zum Einstellen eines empfangenen Stellwinkel-Sollwerts (SET_{α}) am Stellanschluss (SA) mittels der Motorsteuereinheit (LE),
- wobei der Stellantrieb einen elektrischen Anschluss (EA) zum Anschliessen des Stellantriebs an einer externen Steuerleitung (SL) umfasst, wobei die externe Steuerleitung (SL) zur Energieversorgung des Stellantriebs (S) sowie zum Empfangen des von der externen Steuerleitung (SL) empfangenen Stellwinkels vorgesehen ist, oder
- wobei der Stellantrieb einen Energiespeicher zur autarken Energieversorgung des Stellantriebs sowie eine Funkdatenschnittstelle zum Empfangen des Stellwinkel-Sollwerts (SET_{α}) aufweist, **dadurch gekennzeichnet,**
- **dass** der Stellantrieb (S) einen mit der Steuerungseinheit (EL) verbundenen weiteren elektrischen Anschluss (WA) zur Energieversorgung sowie zum Empfang eines Drehwinkelwerts (α) von einer angeschlossenen Einrichtung (E) nach einem der vorherigen Ansprüche aufweist, oder
- **dass** der Stellantrieb (S) eine mit der Steuerungseinheit (EL) verbundene Funkeinheit (FMA) zum Empfang eines Drehwinkelwerts (α) von einer angeschlossenen Einrichtung (E) nach einem der vorherigen Ansprüche aufweist, und
- **dass** die Steuerungseinheit (SE) des Stellantriebs (S) dazu eingerichtet ist, einen empfangenen Drehwinkelwert (α) als Stellwinkel-Istwert für das Einstellen des empfangenen Stellwinkel-Sollwerts (SET_{α}) am Stellanschluss (SA) als Feedbackgrösse heranzuziehen.

15. Stellantrieb nach Anspruch 14, wobei der Stellantrieb (S) die mit der Steuerungseinheit (EL) verbundene Funkeinheit (FMA) zum Empfang des Drehwinkelwerts (α) aufweist und wobei die Funkeinheit (FMA) zur induktiv gekoppelten Energieversorgung über eine Luftschnittstelle (LS) hinweg eingerichtet ist.
